# EUROPÄISCHE PATENTSCHRIFT

(11) **EP 2 641 078 B1**
(45) Veröffentlichungstag und Bekanntmachung des Hinweises auf die Patenterteilung: **07.01.2015**
(21) Anmeldenummer: 11782136.3
(22) Anmeldetag: 11.11.2011
(51) Int. Cl.: G01N 21/64, G02B 21/00, G02B 21/16, G02B 21/36, G02B 27/58

(54) **TIEFENAUFLÖSUNGSGESTEIGERTE MIKROSKOPIE**
MICROSCOPY WITH IMPROVED DEPTH RESOLUTION
MICROSCOPIE À RÉSOLUTION EN PROFONDEUR AMÉLIORÉE

(30) Priorität: 16.11.2010 DE 102010044013
(43) Veröffentlichungstag der Anmeldung: 25.09.2013
(73) Patentinhaber: Carl Zeiss Microscopy GmbH, 07745 Jena (DE)
(72) Erfinder: KALKBRENNER, Thomas, 07743 Jena (DE); LIPPERT, Helmut, 07743 Jena (DE); KLEPPE, Ingo, 07743 Jena (DE)
(74) Vertreter: Geyer, Fehners & Partner
(86) Internationale Anmeldenummer: PCT/EP2011/069918
(87) Internationale Veröffentlichungsnummer: WO 2012/065910

(56) Entgegenhaltungen:
- DE-A1-102008 009 216
- US-B1- 7 675 045

## Beschreibung

Die Erfindung bezieht sich auf ein Verfahren zur hochauflösenden Lumineszenzmikroskopie einer Probe, die mit Markierungsmolekülen markiert ist, welche derart aktivierbar sind, dass sie erst aktiviert zur Abgabe bestimmter Lumineszenzstrahlung anregbar sind, wobei das Verfahren folgende Schritte aufweist:
a) wiederholtes Aktivieren und Anregen einer Teilmenge der in der Probe vorhandenen Markierungsmoleküle zur Abgabe von Lumineszenzstrahlung, wobei in der Probe mindestens ein Teil der lumineszierenden Markierungsmoleküle zu den ihnen nächst benachbarten lumineszierende Markierungsmoleküle mindestens einen Abstand haben, der größer oder gleich einer Länge ist, welche sich aus einer vorbestimmten optischen Auflösung ergibt,
b) wiederholtes Abbilden der Probe mit lumineszierenden Markierungsmolekülen längs einer Tiefenrichtung und mit der vorbestimmten optischen Auflösung und
c) Erzeugen von Einzelbildern aus den Abbildungen aus Schritt b), wobei in den Einzelbildern die geometrischen Orte der lumineszierenden Markierungsmoleküle mit einer über die vorbestimmte optische Auflösung gesteigerten Ortsauflösung ermittelt werden.

Die Erfindung bezieht sich weiter auf ein Mikroskop zur hochauflösenden Lumineszenzmikroskopie einer Probe, die mit Markierungsmolekülen markiert ist, welche derart aktivierbar sind, dass sie erst aktiviert zur Abgabe bestimmter Lumineszenzstrahlung anregbar sind, wobei das Mikroskop aufweist:
a) einen Beleuchtungsstrahlengang, ausgebildet zum wiederholten Aktivieren und Anregen einer Teilmenge der in der Probe vorhandenen Markierungsmoleküle zur Abgabe von Lumineszenzstrahlung derart, wobei in der Probe mindestens ein Teil der lumineszierenden Markierungsmoleküle zu den ihnen nächst benachbarten lumineszierende Markierungsmoleküle mindestens einen Abstand haben, der größer oder gleich einer Länge ist, welche sich aus einer vorbestimmten optischen Auflösung ergibt,
b) eine Abbildungseinrichtung, ausgebildet zum wiederholten Abbilden der Probe mit lumineszierenden Markierungsmolekülen längs einer Tiefenrichtung und mit der vorbestimmten optischen Auflösung und
c) eine Steuer- und Auswerteeinrichtung, die Einzelbilder aus den Abbildungen erzeugt und in den Einzelbildern die geometrischen Orte der lumineszierenden Markierungsmoleküle mit einer über die vorbestimmte optische Auflösung gesteigerten Ortsauflösung ermittelt.

Im Stand der Technik sind verschiedene Verfahren zur Überwindung der Beugungsgrenze in der Lumineszenzmikroskopie entwickelt worden. Zur Untersuchung von biologischen Präparaten werden in der Lumineszenzmikroskopie bestimmte Farbstoffe (sogenannte Phosphore oder Fluorophore) zur spezifischen Markierung von Proben, z.B. von Zellteilen, verwendet. Die Probe wird mit Anregungsstrahlung darstellender Beleuchtungsstrahlung beleuchtet und die dadurch angeregte Lumineszenzstrahlung mit geeigneten Detektoren erfaßt. Üblicherweise ist dazu im Mikroskop ein dichroitischer Strahlteiler in Kombination mit Blockfiltern vorgesehen, die die Lumineszenzstrahlung von der Anregungsstrahlung abspalten und eine getrennte Beobachtung ermöglichen. Durch dieses Vorgehen ist die Darstellung einzelner, verschieden gefärbter Zellteile im Mikroskop möglich. Natürlich können auch mehrere Teile eines Präparates gleichzeitig mit verschiedenen, sich spezifisch an unterschiedliche Strukturen des Präparates anlagernden Farbstoffen eingefärbt werden. Dieses Verfahren bezeichnet man als Mehrfachlumineszenz. Auch kann man Proben vermessen, die per se, also ohne Farbstoffzugabe lumineszieren.

Lumineszenz wird hier, wie allgemein üblich, als Oberbegriff für Phosphoreszenz und Fluoreszenz verstanden, erfaßt also beide Prozesse. Soweit hier von Fluoreszenz gesprochen wird, ist das pars pro toto und nicht einschränkend zu verstehen.

Ein Verfahren, das eine Auflösung jenseits der Beugungsgrenze erreicht, ist aus der WO 2006127692 oder der DE 102006021317 A1 bekannt. Dieses mit PALM abgekürzte Verfahren (Photo Activated Light Microscopy) verwendet eine Markierungssubstanz, welche mittels optischer Strahlung aktiviert werden kann. Nur im aktivierten Zustand kann die Markierungssubstanz dann zur Abgabe von bestimmter Fluoreszenzstrahlung angeregt werden. Nicht aktivierte Moleküle der Markierungssubstanz senden auch nach Einstrahlung von Anregungsstrahlung keine oder zumindest keine merkliche Fluoreszenzstrahlung ab. Die Aktivierungsstrahlung bring die Markierungssubstanz also in einen Zustand, in dem sie zur Fluoreszenz anregbar ist. Auch andere Aktivierung, z.B. thermischer Art, sind möglich. Man spricht deshalb allgemein von einem Umschaltsignal. Im PALM-Verfahren wird nun das Umschaltsignal so aufgebracht, dass zumindest ein gewisser Anteil der aktivierten Markierungsmoleküle von benachbarten aktivierten Molekülen so beabstandet sind, dass sie gemessen an der optischen Auflösung der Mikroskopie getrennt oder nachträglich trennbar sind. Die aktivierten Moleküle werden also zumindest weitgehend isoliert. Nach Aufnahme der Lumineszenzstrahlung wird für diese isolierten Moleküle dann das Zentrum deren auflösungsbegrenzt bedingten Strahlungsverteilung ermittelt und daraus rechnerisch die Lage der Moleküle mit höherer Genauigkeit bestimmt, als es die optische Abbildung eigentlich zuläßt. Diese gesteigerte Auflösung durch rechnerische Schwerpunktbestimmung der Beugungsverteilung wird in der englischsprachigen Fachliteratur auch als "superresolution" bezeichnet. Sie erfordert, dass in der Probe zumindest einige der aktivierten Markierungsmoleküle mit der optischen Auflösung mit der die Lumineszenzstrahlung detektiert wird, unterscheidbar, also isoliert sind. Dann kann für solche Moleküle die Ortsangabe mit gesteigerter Auflösung erreicht werden.

Zum Isolieren einzelner Markierungsmoleküle nutzt das PALM-Verfahren die Tatsache, dass die Wahrscheinlichkeit, mit der ein Markierungsmolekül nach Empfang des Umschaltsignals gegebener Intensität, z.B. eines Photons der Aktivierungsstrahlung aktiviert wird, für alle Moleküle gleich ist. Über die Intensität des Umschaltsignals und damit die Zahl der Photonen, die auf eine Flächeneinheit der Probe fällt, kann also dafür gesorgt werden, dass die Wahrscheinlichkeit, in einem gegebenen Flächenbereich der Probe vorhandene Markierungsmoleküle zu aktivieren, so gering ist, dass es ausreichend Bereiche gibt, in denen innerhalb der optischen Auflösung nur unterscheidbare Markierungsmoleküle Fluoreszenzstrahlung emittieren. Durch passende Wahl der Intensität, z.B. der Photonendichte, des Umschaltsignals, wird erreicht, dass möglichst nur bezogen auf die optische Auflösung isoliert liegende Markierungsmoleküle aktiviert werden und nachfolgend Fluoreszenzstrahlung aussenden. Die Ortsbestimmung erfolgt mit hochempfindlichen Kameras im Weitfeld mit einer Genauigkeit bis in den Nanometerbereich, wenn genügend Photonen der isolierten Markierungsmoleküle detektiert werden können. Die quasi-punktförmige Lichtquelle, die durch ein lumineszierendes Markierungsmolekül gebildet ist, wird dabei durch die Punktbildverwaschungsfunktion des Mikroskops auf mehrere Kamerapixel abgebildet, und die genaue Position des lumineszierenden Markierungsmoleküls in der der Kameraebene zugeordneten Probenebene kann beispielsweise durch Fitten der bekannten Punktbildverwaschungsfunktion (z.B. mittels eines Gauss-Fits) oder durch Schwerpunktstimmung etc. bestimmt werden. Man erreicht damit Lokalisierungsgenauigkeiten zwischen 5 und 30 nm. Für das Lokalisieren sind verschiedene Bildauswertungsmethoden bekannt. Hierzu wird exemplarisch auf die DE 102008009216 A1 verwiesen. Zur Abbildung der gesamten Probe wird die Isolierung der Markierungsmoleküle der Teilmenge durch Einbringen der Aktivierungsstrahlung, nachfolgende Anregung und Fluoreszenzstrahlungsabbildung so lange wiederholt, bis möglichst alle Markierungsmoleküle einmal in einer Teilmenge enthalten und innerhalb des Auflösung der Abbildung isoliert waren.

Das PALM-Verfahren hat dabei den Vorteil, dass weder für die Aktivierung, noch die für Anregung eine hohe Ortsauflösung benötigt wird. Statt dessen kann sowohl die Aktivierung als auch die Anregung in Weitfeldbeleuchtung erfolgen. Einzelne Varianten des PALM-Verfahrens unterscheiden sich hauptsächlich in der Wahl der Fluorophore und der Art des optischen Schaltprozesses. Die Isolierung kann bei Molekülen, die mit einer separaten Aktivierungsstrahlung zur Anregbarkeit aktiviert werden, durch geeignetes Aufbringen der Aktivierungsstrahlung erfolgen. Es sind aber auch Ansätze bekannt, bei denen z.B. ein gezieltes Bleichen der Probe zur Isolierung ausgenutzt wird.

Diese Lokalisierungsgenauigkeit wird aber lediglich lateral erreicht, also in einer Ebene, die der Bildebene der Kamera zugeordnet ist. Die Verfahren sind also in dieser Hinsicht auf eine zweidimensionale Probenanalyse beschränkt. Zur Lokalisierung lumineszierender Markierungsmoleküle in der dritten Raumrichtung, welche bezogen auf die Abbildung der Probe die Tiefenrichtung ist, sind aus dem Stand der Technik ebenfalls Ansätze bekannt.

Die Publikation Huan et al., Science 319, Seite 810, 2008, schlägt vor, in den Abbildungsstrahlengang eine schwache Zylinderlinse einzubringen, die zu einer astigmatischen Punktbildverwaschungsfunktion führt. Dementsprechend wird das Bild des Moleküls auf der Kamera elliptisch verzerrt, sobald sich das Molekül ober- oder unterhalb des Symmetriepunktes der Punktbildverwaschungsfunktion befindet. Aus der Orientierung und der Stärke der Verzerrung läßt sich die Information über die Tiefenlage des lumineszierenden Markierungsmoleküls gewinnen. Ein Nachteil dieses Verfahrens liegt darin, dass auch die lokale Umgebung und die Orientierung eines molekularen Dipols zu einer Verzerrung des Bildes des lumineszierenden Markierungsmoleküls führen können, die mit der Tiefenlage nichts zu tun hat. Solchen lumineszierenden Markierungsmolekülen wird dann, je nach ihrer Orientierung, ein falscher Tiefenwert zugeordnet.

Die Veröffentlichung Pavani et al., PNAS 106, Seite 2995, 2009, schlägt vor, die Punktbildverwaschungsfunktion durch einen räumlichen Phasenmodulator in der Abbildung zu einer Doppelhelixstruktur zu modifizieren. Die Punktbilder einzelner, lumineszierender Markierungsmoleküle werden dann zu Doppelspots, ihre Tiefenlage ist in der Winkelorientierung der gemeinsamen Achse der Doppelspots kodiert.

Die Veröffentlichung von Shtengel et al., PNAS 106, Seite 3125, 2009, schlägt vor, die von den lumineszierenden Markierungsmolekülen emittierten Photonen mit sich selbst zur Interferenz zu bringen. Dazu werden zwei in 4π-Konfiguration montierte Objektive verwendet, welche die lumineszierenden Markierungsmoleküle gleichzeitig beobachten. Die derart gewonnenen Teilstrahlengänge werden mittels eines speziellen Drei-Wege-Strahlteilers zur Interferenz gebracht. Jedes der damit erhaltenen Dreipunktbilder wird mit einer Kamera detektiert. Die Intensitätsverhältnisse der Dreipunktbilder geben Aufschluß über die Tiefenlage.

Die Publikationen Toprak et al., Nano Lett. 7, Seiten 2043-2045, 2007 sowie Juette et al., Nature Methods 5, Seite 527, 2008, beschreiben einen Ansatz, bei dem ein 50/50-Strahlteiler in den Abbildungsstrahlengang eingebaut wird, der das Abbild der Probe in zwei Teilbilder aufspaltet. Diese zwei Bilder werden eigenständig detektiert. Zusätzlich wird in einem der damit erhaltenen Teilstrahlengänge eine optische Weglängendifferenz dergestalt eingeführt, dass sich aus den beiden Teilstrahlengänge zwei Objektebenen ergeben, die etwa um die halbe oder ganze optische Mindestauflösung (beispielsweise 700 nm) in z-, also Tiefenrichtung, auseinanderliegen. Die Tiefenposition von Markierungsmolekülen, die zwischen diesen beiden Ebenen liegen, ergibt sich nun durch Subtraktion der zwei Teilbilder desselben Markierungsmoleküls oder durch entsprechendes Fitten einer dreidimensionalen Punktbildverwaschungsfunktion. Dieses Verfahren erfordert zwei hochempfindliche Kameras, oder zwei Bilder müssen auf den Empfangsbereich einer hochempfindlichen Kamera nebeneinander angeordnet werden, was naturgemäß zu einer Einschränkung des Bildfeldes führt. Für beide Optionen sind zudem eine präzise Justage der Strahlengänge und Kalibriermessungen unerläßlich, um eine sub-pixelgenaue Überlagerung der beiden Teilbilder zu erreichen. Weiter sind die beiden Teilbilder eines Markierungsmoleküls in der Regel von unterschiedlicher Form, da sich die laterale Ausdehnung der Punktverwaschungsfunktion eines abbildenden Systems in Abhängigkeit von der Lage der betrachteten Objektebene ändert.

Die DE 102008009216 A1 beschreibt ein Verfahren zur Lumineszenzmikroskopie nach dem PALM-Prinzip, wobei zur Einstrahlung der Anregungs- und/oder Aktivierungsstrahlung ein Lichtblatt verwendet wird, das in Tiefenrichtung durch die Probe gescannt wird.

Die US 7675045 B1 offenbart ein Verfahren zur Lumineszenzmikroskopie nach dem PALM-Prinzip, wobei zur 3D-Auflösung ein Zwei-Photonen-Prozess verwendet und die Probe mehrmals gegenüber einer Tiefenebene, in der die Aktivierung erfolgt, verschoben wird.

Der Erfindung liegt deshalb die Aufgabe zugrunde, ein Verfahren zum hochauflösenden Mikroskop so weiterzubilden, dass unter Vermeidung der erwähnten Nachteile des Standes der Technik eine Hochauflösung in Tiefenrichtung erreicht ist.

Die Erfindung ist in den Ansprüchen definiert.

Diese Aufgabe wird durch ein Verfahren der eingangs genannten Art gelöst, bei dem zur Hochauflösung längs der Tiefenrichtung
d) die Aktivierung und/oder Anregung in den Schritten a) mit einer Strahlung erfolgt, die in mindestens zwei Bereiche eingebracht wird, wobei die Bereiche sich jeweils in einer Ebene erstrecken, die im wesentlichen senkrecht zur Tiefenrichtung liegt, die Bereiche in Tiefenrichtung eine vorbestimmte Ausdehnung haben und die Bereiche so angeordnet sind, dass sie in Tiefenrichtung gesehen hintereinander liegen und sich nur teilweise überlappen, und
e) in den Schritten b) getrennte Bilder der Probe bei Aktivierung und/oder Anregung jedes der mindestens zwei Bereiche aufgenommen werden, um aus den getrennten Bildern eine Tiefeninformation der lumineszierenden Markierungsmoleküle zu gewinnen.

Die Aufgabe wird weiter durch ein Mikroskop der eingangs genannten Art gelöst, bei dem zur Hochauflösung längs der Tiefenrichtung
d) der Beleuchtungsstrahlengang die Aktivierungs- und/oder Anregungsstrahlung in mindestens zwei Bereiche einbringt, wobei die Bereiche sich jeweils längs einer Ebene erstrecken, die im wesentlichen senkrecht zur Tiefenrichtung liegt, die Bereiche in Tiefenrichtung eine vorbestimmte Ausdehnung haben und die Bereiche so angeordnet sind, dass sie in Tiefenrichtung gesehen hintereinander liegen und sich nur teilweise überlappen, und
e) die Abbildungseinrichtung getrennte Bilder der Probe bei Aktivierung und/oder Anregung jedes der mindestens zwei Bereiche aufnimmt und die Steuer- und Auswerteeinrichtung aus den getrennten Bildern eine Tiefeninformation der lumineszierenden Markierungsmoleküle gewinnt.

Die Erfindung wendet sich also vom Vorgehen des Standes der Technik ab, der durchgängig einen Eingriff bei der Detektion vornimmt, um die Tiefenlage, also die z-Position, der Markierungsmoleküle zu bestimmen. Erfindungsgemäß wird nun bei der Anregung und/oder Aktivierung geeignet eingegriffen, um eine Lokalisierung hinsichtlich der Tiefenlage zu erreichen. Je nach verwendetem Fluorophor wird dabei die Anregungs- oder die Aktivierungsstrahlung oder eine Strahlung, die beides bewirkt, entsprechend eingestrahlt. Nachfolgend wird in der Beschreibung rein exemplarisch z. T. auf die Anregungsstrahlung Bezug genommen. Die Ausführungen gelten jedoch für die Aktivierungsstrahlung oder eine sowohl Aktivierung als auch Anregung bewirkende Strahlung gleichermaßen.

Die Strahlung beleuchtet im erfindungsgemäßen Konzept in zwei Zuständen, denen jeweils ein Bereich zugeordnet ist, der in einer quer zur Tiefenrichtung liegenden Ebene angeordnet ist. Der jeweilige Bereich kann auch nur einen Teilbereich der Ebene erfassen. Die Bereiche liegen zumindest teilweise hintereinander und überlappen sich nur teilweise. Von den beiden Bereichen werden getrennte Bilder aufgenommen. Nur Markierungsmoleküle, die im Überlappbereich zwischen erstem und zweitem Bereich liegen, erscheinen in beiden Bildern. Somit kann die Ortsauflösung in Tiefen-Richtung auf die Größe des Überlappbereiches reduziert werden. Da bei der Aufnahme von Bildern aus beiden Bereichen kein geänderter Detektionsstrahlengang vorliegt, ändern sich die Bilder lediglich hinsichtlich ihrer Intensität und nicht hinsichtlich ihrer Form.

Die Bildertrennung kann dadurch erzeugt werden, dass die Beleuchtung der Bereiche geeignet moduliert ist, z. B. durch eine abwechselnde Beleuchtung.

Der Überlapp der in Tiefenrichtung hintereinanderliegenden Bereiche ist maßgeblich für die Auflösung in Tiefenrichtung. Die Ausdehnung der Bereiche in Tiefenrichtung ist dabei je nach optischem Aufbau unterschiedlich scharf begrenzt. Strahlt man beispielsweise beugungsbegrenzte Strahlung in Form eines Lichtblattes ein, hängt die Dicke des Lichtblattes, also seine Ausdehnung in Tiefenrichtung von der Einstrahlungsoptik ab. Die Lichtintensität genügt beispielsweise gemäß einer Gauss-Funktion in z-Richtung. Die räumliche Ausdehnung kann dann anhand eines Wertes festgelegt werden, an dem die Lichtintensität auf ein bestimmtes Mindestmaß abgesunken ist. Ein üblicher Wert ist hierbei der 1/e-Wert. Andere Definitionen sind jedoch im Rahmen der Erfindung möglich.

Die Größe des Überlapp-Bereiches wirkt sich auf die Auflösung in Tiefenrichtung aus. Deshalb ist es bevorzugt, ein Maß, das den Überlapp-Bereich in Tiefenrichtung wiedergibt, abhängig von einer Dichte der Markierungsmoleküle in der Probe zu wählen. Hierbei kann zuerst eine Abbildung der Proben im herkömmlichen Sinne, d.h. ohne gesteigerte Tiefenauflösung vorgenommen werden, um die Dichte der Markierungsmoleküle in der Probe zu bestimmen. Anschließend wird der Überlapp passend gewählt, beispielsweise unter Rückgriff auf zuvor bestimmte Tabellenwerte, und eingestellt.

Für die erfindungsgemäße Auflösungserhöhung in Tiefenrichtung ist es wesentlich, dass die Bereiche zumindest teilweise hintereinander liegen und sich teilweise überlappen und dass die Bereiche hinsichtlich der Detektion unterscheidbar bestrahlt werden.

Die Strahlung kann in Form eines quer zur Tiefenrichtung liegenden Lichtblattes eingestrahlt werden. Dabei ist es möglich, ein Lichtblatt quer zur Tiefenrichtung in mindestens zwei Stellungen zu verschieben, so dass das Lichtblatt in der einen Stellung mit dem Lichtblatt in der anderen Stellung einen Überlapp-Bereich hat. Die Verschiebung ist also geringer als die halbe Dicke des Lichtblattes. Alternativ ist es auch möglich, zwei Lichtblätter einzusetzen, die so zueinander liegen, dass sie in Tiefenrichtung überlappen. Zwischen diesen beiden Lichtblättern kann dann umgeschaltet werden, d.h. die Lichtblätter werden abwechselnd ein- und ausgeschaltet, oder die Lichtblätter werden unterschiedlich moduliert. Als Lichtblatt kann hier auch eine Anordnung begriffen werden, in welcher eine Lichtblattebene durch einen Lichtstrahl während der Detektionszeit abgerastert wird, so dass durch die zeitliche Bewegung quasi eine Lichtblattbeleuchtung vorliegt. Das Abrastern erfolgt schneller, als es der zeitlichen Auflösung der Detektion entspricht.

Unter einem "Lichtblatt" wird hier u. a. verstanden, dass die Beleuchtung unter einem Winkel zur Detektionsachse z eingestrahlt wird. In der Regel umfaßt der Beleuchtungsbereich dabei den Bereich der Detektionsebene, welcher durch die Detektionsoptik vorgegeben wird. Die Beleuchtung kann dabei sowohl parallel, z. B. mit Hilfe einer anamorphotischen Optik, als auch sequentiell durch Abrastern mit Hilfe eines Anregungsstrahls erfolgen. Auch die Kombination aus beiden Varianten ist möglich. Im Sinne der hier vorgestellten Erfindung sind auch Varianten umfaßt, bei denen der Anregungsbereich die Detektionsebene nur partiell umfaßt, z. B. durch Einstrahlen lediglich einer Linie längs zur Detektionsebene oder durch Einstrahlen eines Lichtblattes unter einem Winkel zur Detektionsebene, bzw. einer Kombination solcher Varianten. Verschiedene Möglichkeiten zur Lichtblatterzeugung sind in P. Keller und E. Stelzer, "Quantitative in vivo imaging of entire embryos with Digital Scanned Laser Light sheet Fluorescence Microscopy", Current Opinion in Neurobiology, 2008, Vol. 18, S. 624-632 beschrieben.

Die erfindungsgemäße Einstrahlung der Anregungs- und/oder Aktivierungsstrahlung in zwei Tiefenbereiche, die hintereinander liegen, sich überlappen, und hinsichtlich der Detektion unterscheidbar bestrahlt werden, kann auch dadurch erreicht werden, dass die Strahlung nicht, wie bei einem Lichtblatt, quer zur Tiefenrichtung eingestrahlt wird, sondern längs der Tiefenrichtung. Fokussiert man Strahlung in die Probe, ergibt sich nur in einem kleinen Volumenbereich eine Anregung und/oder Aktivierung. Dieser Fokusbereich ist dann nicht nur lateral, sondern auch in Tiefenrichtung begrenzt. Legt man zwei solche Fokusbereiche hintereinander, hat man ebenfalls zwei Bereiche, welche das erfindungsgemäße Konzept zu realisieren erlauben. Um die gesamte Probe im Weitfeld zu beleuchten, ist es möglich, die beiden Foki längs der jeweiligen Fokusebene (quer zur Tiefenrichtung) zu verschieben. Führt man eine solche Verschiebung schnell genug aus, ist jeder Bereich für sich in einem Zeitraum mit Anregungs- und/oder Aktivierungsstrahlung beleuchtet, der kurz gegen die Lebensdauer der damit angeregten Lumineszenz ist. Im Ergebnis hat man wiederum zwei in Tiefenrichtung hintereinanderliegende Bereiche, die um ein bestimmtes Maß überlappen. Das Verschieben der Foki längs der jeweiligen Ebene kann am einfachsten dadurch erreicht werden, dass eine rotierende Scheibe bei der Einstrahlung der Anregungs- und/oder Aktivierungsstrahlung verwendet wird, auf der sich Mikrolinsen befinden, die unterschiedliche Brennweiten entsprechend der hintereinanderliegenden Staffelung der zwei Bereiche haben.

Wenn ein Zwei-Photonenprozeß zur Anregung und/oder Aktivierung ausgenutzt wird, ist die Intensitätsverteilung in Tiefenrichtung besonders scharf und erlaubt eine besonders gute Hochauflösung.

Soweit die Erfindung vorstehend oder nachfolgend anhand eines Verfahrens beschrieben wird, gilt diese Offenbarung gleichermaßen für ein entsprechendes Mikroskop, das über geeignete Mittel und insbesondere über eine geeignete Steuer- und Auswertevorrichtung verfügt, um das Verfahren durchzuführen. Umgekehrt offenbart eine Beschreibung eines entsprechenden Mikroskops gleichermaßen entsprechende Verfahrensschritte gemäß dessen Arbeitsweise.

Nachfolgend wird die Erfindung beispielsweise anhand der beigefügten Zeichnungen, die auch erfindungswesentliche Merkmale offenbaren, noch näher erläutert. Es zeigen:
- Fig. 1: eine Schemadarstellung eines aktivierten Markierungsmoleküls in einem auflösungsbegrenzten Volumen,
- Fig. 2: eine Schemadarstellung der Abbildung verschiedener aktivierter und nicht-aktivierter Markierungsmoleküle auf einen ortsauflösenden Detektor,
- Fig. 3: ein Ablaufdiagramm für die Bilderzeugung im PALM-Verfahren,
- Fig. 4: zum Ablaufdiagramm der Fig. 3 gehörende Erläuterungsdarstellungen von auf den Detektor der Fig. 2 abgebildeten Markierungsmolekülen,
- Fig. 5: ein Schemadarstellung eines Mikroskops zur PAL-Mikroskopie,
- Fig. 6: eine Schemadarstellung eines Mikroskops zur auch in Tiefenrichtung hochauflösenden PAL-Mikroskopie in einer ersten Bauweise,
- Fig. 7: eine schematische Schnittdarstellung einer Beleuchtung im Mikroskop der Fig. 6,
- Fig. 8: Draufsichten auf den Detektor des Mikroskops der Fig. 6,
- Fig. 9: eine Schemadarstellung eines Mikroskops gemäß einer zweiten Bauweise,
- Fig. 10: eine Draufsicht auf eine Minilinsendrehscheibe, die im Mikroskop gemäß Fig. 9 zur Anwendung kommt,
- Fig. 11: eine Darstellung ähnlich der Fig. 7, jedoch für das Mikroskop der Fig. 9,
- Fig. 12 und 13: Diagramme zur Erläuterung der Isolierung lumineszierender Markierungsmoleküle in Tiefenrichtung,
- Fig. 14: eine Schemadarstellung eines Mikroskops gemäß einer dritten Bauweise, und
- Fig. 15: eine Schemadarstellung eines Mikroskops gemäß einer vierten Bauweise.

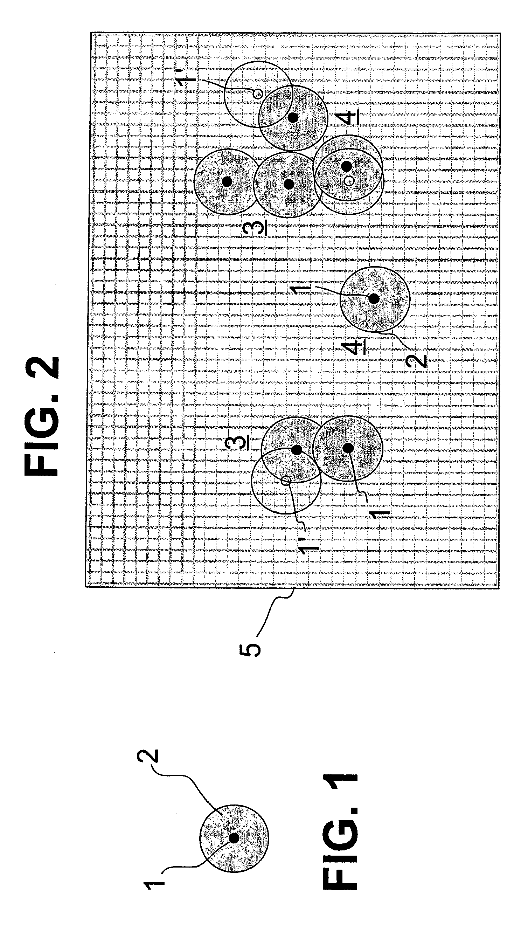

Fig. 1 zeigt schematisch ein Markierungsmolekül 1, das zur Fluoreszenz angeregt wurde. Natürlich erfordert die Fluoreszenzdetektion eine Vielzahl von Anregungen, da jede Anregung genau ein Fluoreszenzphoton liefert und die Strahlungsdetektion eine Integration vieler Fluoreszenzphotonen benötigt. Die vom Markierungsmolekül 1 abgegebene Fluoreszenzstrahlung kann in einem Mikroskop aufgrund physikalischer Prinzipien lediglich mit einer begrenzten optischen Auflösung detektiert werden. Selbst wenn das Mikroskop die Beugungsgrenze der optischen Auflösung erreicht, werden die Photonen des fluoreszierenden Markierungsmolekül 1 immer noch beugungsbedingt gestreut und somit in einen Beugungsscheibchen 2 detektiert. Das Mikroskop gibt also prinzipiell statt der geometrischen Ausdehnung des Markierungsmoleküls 1, die in Fig. 1 schematisch als schwarzer Kreis gezeichnet ist, ein größeres Objekt wieder, das in Fig. 1 durch das Beugungsscheibchen 2 veranschaulicht ist. Die Größe des Beugungsscheibchens 2 hängt von der Güte der verwendeten Mikroskopieeinrichtung ab und ist durch die Halbwertsbreite der Punktbildverwaschungsfunktion der optischen Abbildung definiert. Tatsächlich handelt es sich natürlich nicht um ein zweidimensionales Objekt, sondern um ein Beugungsvolumen in das die Fluoreszenzphotonen gelangen. In der zweidimensionalen Darstellung der Fig. 1 erscheint dieses aber als Scheibchen. Der Begriff Beugungsscheibchen wird hier deshalb ganz allgemein für ein maximales Auflösungsvolumen genommen, welches die verwendete Optik erzielen kann. Die verwendete Optik muß aber nicht zwingend an der Beugungsgrenze arbeiten, auch wenn dies zu bevorzugen ist.

Um nun das Markierungsmolekül 1 innerhalb des Beugungsscheibchens 2 genauer lokalisieren zu können, wird das oben bereits allgemein geschilderte PALM-Verfahren eingesetzt. Dieses aktiviert einzelne Markierungsmoleküle, wobei in dieser Beschreibung ganz allgemein unter dem Begriff Aktivierung die Aktivierung bestimmter Lumineszenzeigenschaften der Markierungsmoleküle verstanden wird, also sowohl ein Einschalten der Lumineszenzanregbarkeit als auch eine Änderung des Lumineszenzemissionsspektrum, was dem Einschalten bestimmter Lumineszenzeigenschaften entspricht. Im hier beschriebenen Ausführungsbeispiel wird die Aktivierung durch optische Aktivierungsstrahlung bewirkt. Es sind aber auch andere nicht-optische Aktivierungsmechanismen möglich.

Die Aktivierung erfolgt nun so, dass es zumindest einige aktivierte Moleküle gibt, deren Schwerpunkt nicht im Beugungsscheibchen anderer aktivierter Moleküle liegt, d.h. die innerhalb des optischen Auflösung zumindest gerade noch unterscheiden werden können.

Fig. 2 zeigt schematisch eine exemplarische Situation auf einem Detektor 5, der die Photonen ortauflösend integriert. Wie zu sehen ist, gibt es Bereiche 3, in denen die Beugungsscheibchen benachbarter Markierungsmoleküle überlappen. Hierbei sind, wie im linken Bereich 3 der Fig. 2 zu sehen ist, jedoch lediglich diejenigen Markierungsmoleküle relevant, die zuvor aktiviert wurden. Nicht aktivierte Markierungsmoleküle 1' geben die bestimmte Fluoreszenzstrahlung, welche auf dem Matrix-Detektor 5 aufgefangen wird, nicht ab, spielen also keine Rolle.

In den Bereichen 4, z.B. dem in der Mitte des Matrix-Detektors 5 gelegenen Bereiches 4, liegen Markierungsmoleküle 1 so, dass ihr Beugungsscheibchen 2 mit keinem Beugungsscheibchen eines anderen aktivierten Markierungsmolekül 1 überlappt. Der rechte Bereich des Matrix-Detektors 5 zeigt, dass Bereiche 3, in denen Beugungsscheibchen von aktivierten Markierungsmolekülen überlappen, zu Bereichen 4, in denen dies nicht der Fall ist, durchaus benachbart liegen können. Der rechte Bereich 4 verdeutlicht zudem, dass die Nachbarschaft eines aktivierten Markierungsmoleküls 1 zu einem nicht aktivierten Markierungsmolekül 1' für die Detektion keine Rolle spielt, da ein solches Markierungsmolekül 1' ja die vom Matrix-Detektor 5 detektierte Fluoreszenzstrahlung nicht abgibt, also nicht fluoresziert.

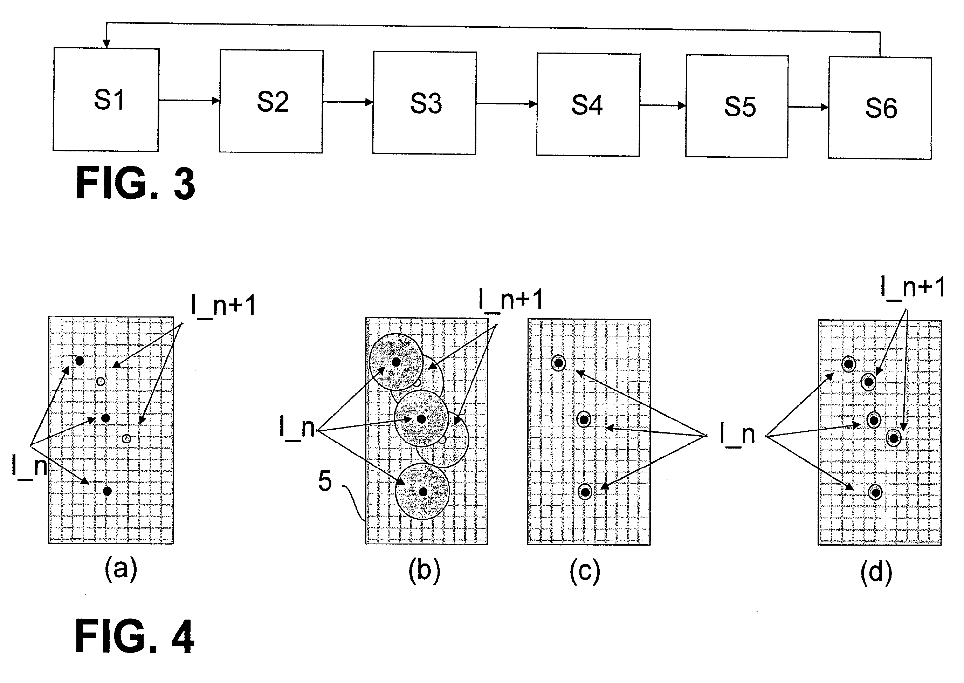

Zur Aufnahme eines jenseits der apparativ vorgegebenen optischen Auflösung detaillierten Bildes, das im Sinne dieser Beschreibung ein hochaufgelöstes Bild ist, werden nun die in Fig. 3 schematisch dargestellten Schritte eingesetzt.

In einem ersten Schritt S1 wird mittels eines Umschaltsignals eine Teilmenge der Markierungsmoleküle aktiviert; sie werden also von einem ersten Zustand, in dem sie zur Abgabe der bestimmten Fluoreszenzstrahlung nicht anregbar sind, in einen zweiten Zustand geschaltet, in dem sie zur Abgabe der bestimmten Fluoreszenzstrahlung anregbar sind. Natürlich kann das Aktivierungssignal auch eine selektive Deaktivierung bewirken, also in Schritt S1 auch ein inverses Vorgehen verwendet werden. Wesentlich ist, dass nach Schritt S1 lediglich eine Teilmenge der Markierungsmoleküle zur Abgabe der bestimmten Fluoreszenzstrahlung angeregt werden kann. Die Aktivierung bzw. Deaktivierung (nachfolgend wird zur Vereinfachung lediglich der Fall der Aktivierung geschildert) erfolgt abhängig von den verwendeten Markierungsmolekülen. Bei einem Farbstoff wie z.B. DRONPA, PA-GFP oder reversibel schaltbaren synthetischen Farbstoffen (wie Alexa/Cyan-Konstrukten) erfolgt die Aktivierung durch optische Strahlung, ist das Umschaltsignal also Umschaltstrahlung.

Die unter der Fig. 3 dargestellte Fig. 4 zeigt im Teilbild a den Zustand nach Schritt S1. Lediglich eine Teilmenge der Markierungsmoleküle I_n ist aktiviert. Die Markierungsmoleküle dieser Teilmenge sind mit einem voll ausgezeichneten schwarzen Punkt wiedergegeben. Die restlichen Markierungsmoleküle sind in diesem Schritt nicht aktiviert worden. Sie sind in Teilbild a der Fig. 4 mit I_n+1 bezeichnet.

Markierungsmoleküle, die aktiviert wurden, können dann in einem zweiten Schritt S2 zur Abgabe von Fluoreszenzstrahlung angeregt werden. Als Fluoreszenzfarbstoffe werden vorzugsweise aus dem Stand der Technik bekannte fluoreszierende Proteine, wie PA-GFP oder auch DRONPA verwendet. Die Aktivierung erfolgt bei solchen Molekülen mit Strahlung im Bereich von 405 nm, die Anregung zur Fluoreszenzstrahlung bei einer Wellenlänge von etwa 488 nm, und die Fluoreszenzstrahlung liegt in einem Bereich oberhalb von 490 nm.

In einem dritten Schritt S3 wird die abgegebene Fluoreszenzstrahlung detektiert, beispielsweise durch Integration der aufgenommenen Fluoreszenzphotonen, so dass sich die im darunter liegenden Teilbild b der Fig. 4 dargestellte Situation auf dem Matrix-Detektor 5 ergibt. Wie zu sehen ist, überlappen die Beugungsscheibchen der aktivierten Markierungsmoleküle I_n nicht. Die Größe der Beugungsscheibchen wird durch die optische Auflösung der Abbildung auf den Matrix-Detektor 5 festgelegt. Zusätzlich sind in Teilbild b der Fig. 4 (theoretische) Beugungsscheibchen von Fluoreszenzmolekülen eingezeichnet, die zur nicht-aktivierten Gruppe I_n+1 gehören. Da diese nicht-aktivierten Markierungsmoleküle keine Fluoreszenzstrahlung abgeben, stört keine in deren (theoretischen) Beugungsscheibchen liegende Fluoreszenzstrahlung die Detektion der Fluoreszenzstrahlung der Teilmenge I_n der aktivierten Markierungsmoleküle.

Damit in der Teilmenge I_n möglichst wenige Beugungsscheibchen so überlappen, dass die Markierungsmoleküle gar nicht mehr unterscheidbar sind, wird die Aktivierungsenergie so eingestellt, dass die Teilmenge I_n nur einen vergleichsweise geringen Anteil der Gesamtmenge der Markierungsmoleküle ausmacht, so dass statistisch viele Markierungsmoleküle bezogen auf das mit der optischen Anordnung auflösbare Volumen unterscheidbar sind.

In einem vierten Schritt S4 wird die Lage der fluoreszenzierenden Markierungsmoleküle rechnerisch aus der Beugungsverteilung der Fluoreszenzscheibchen ermittelt, wodurch die Auflösung, mit der die Lage der aktivierten Markierungsmoleküle bekannt ist, über die Auflösung der optischen Anordnung hinaus geschärft wird, wie das Teilbild c der Fig. 4 zeigt.

Alternativ ist zu einer rechnerischen Bestimmung ist es ganz grundsätzlich möglich, die aufgenommene Fluoreszenzstrahlung nichtlinear zu verstärken und so mit verringertem Aufwand die Auflösung über die optischen Anordnung hinaus zu schärfen. Die nichtlineare Verstärkung kann beispielsweise gemäß der Funktion S = A • F^{N} (Gleichung 1) oder S = A • exp^{F/w} (mit w = 10^{-N} (Gleichung 2)) beschrieben werden, wobei F die Amplitude des Fluoreszenzsignals, A ein Normierungsfaktor und N eine ganze Zahl größer 1 ist. Besonders vorteilhaft ist eine starke nichtlineare Abhängigkeit des Parameters S von F, also z.B. hohe Werte für N in den Gleichungen 1 oder 2. Natürlich können auch andere Funktionen verwendet werden. Grundsätzlich ist die Nichtlinearität vorzugsweise so gewählt, dass die Halbwertsbreite der Beugungsscheibe einer angestrebten räumlichen Auflösung für die Ortsangabe der Markierungsmoleküle entspricht. Neben einer nichtlinearen Verstärkung kann auch eine nichtlineare Dämpfung verwendet werden. Hierbei werden Fluoreszenzsignale geringer Amplitude oder Intensität gedämpft, wohingegen starke Signale zumindest weitgehend ungedämpft bleiben. Natürlich kann auch eine Kombination von nichtlinearer Verstärkung und Dämpfung verwendet werden.

Ein fünfter Schritt S5 setzt die Markierungsmoleküle, deren Lageangabe präzisiert ist, nun zu einem Einzelbild zusammen, dessen Ortsauflösung über die optische Auflösung hinaus gesteigert ist. Es enthält allerdings nur Informationen über die zuvor aktivierte Teilmenge der Markierungsmoleküle.

In einem sechsten Schritt S6 wird das Einzelbild auf bekannte Weise in ein Gesamtbild eingestellt. Anschließend wird zu Schritt S1 zurückgesprungen, wobei die bisher floureszierenden Moleküle wieder deaktiviert sein müssen. Eine Deaktivierung kann je nach Markierungsmolekülart durch eine separate Strahlung oder durch Abklingen des Aktivierungszustandes erreicht werden. Auch ist es möglich bereits abgebildete Markierungsmoleküle durch Anregungsstrahlung zu bleichen.

Mit jedem Durchlauf wird so ein weiteres Einzelbild erhalten, das zum Gesamtbild beiträgt. Im nächsten Durchlauf wird eine andere Teilmenge der Markierungsmoleküle aktiviert, z.B. die in Fig. 4 dargestellt Teilmenge I_n+1.

Durch den mehrfachen Durchlauf durch die Schritte S1 bis S6 wird das Gesamtbild aus Einzelbildern der einzelnen Durchläufe aufgebaut, welche die Orte der Markierungsmoleküle mit einer Ortsauflösung angeben, die gegenüber der Auflösung der optischen Abbildung geschärft ist. Durch eine entsprechende Anzahl von Iterationen baut sich somit ein hochaufgelöstes Gesamtbild sukzessive auf. Die Reduktion des Beugungsscheibchens erfolgt dabei bei dem Verfahren vorzugsweise in allen drei Raumdimensionen, wenn mehrere Bildstapel, welche in z-Richtung beabstandet sind, aufgenommen werden. Dann enthält das Gesamtbild in allen drei Raumrichtungen hochaufgelöst die Ortsangabe der Markierungsmoleküle.

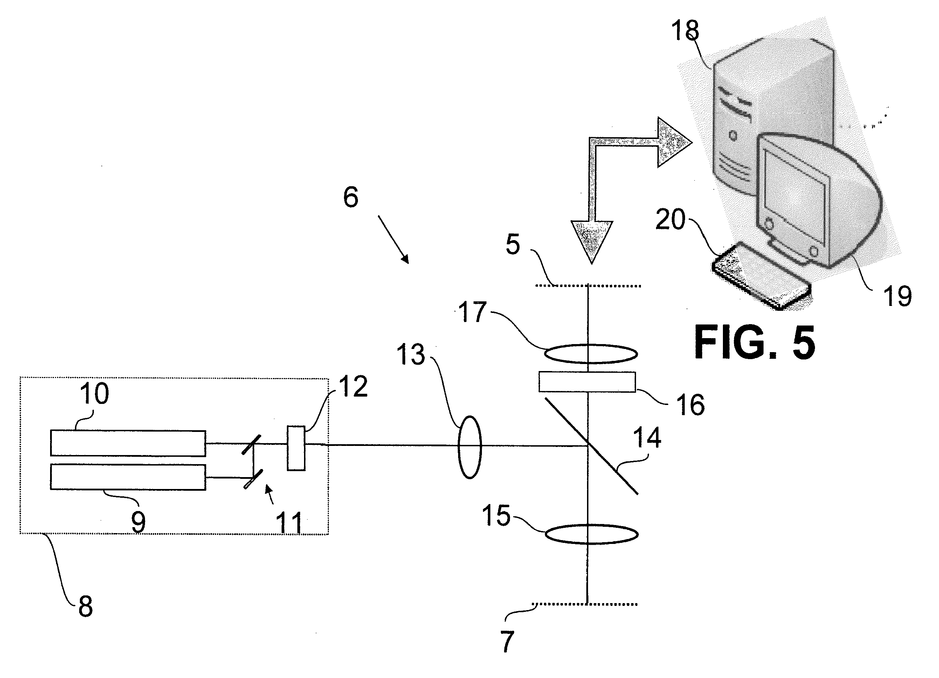

Fig. 5 zeigt schematisch ein Mikroskop 6 zur hochauflösenden Abbildung einer Probe 7. Die Probe ist beispielsweise mit dem Farbstoff DRONPA (vergleiche WO 2007009812 A1) markiert. Zur Aktivierung sowie zur Fluoreszenzanregung weist das Mikroskop 6 einen Beleuchtungsstrahlengang 22 auf. Dieser umfaßt eine Strahlungsquelle 8, die über einzelne Laser 9 und 10 verfügt, deren Strahlen über einen Strahlvereiniger 11 zusammengeführt wird. Die Laser 9 und 10 können beispielsweise bei 405 nm (Aktivierungsstrahlung) und 488 nm (Fluoreszenzanregung und Deaktivierung) Strahlung abgeben. Es sind auch Farbstoffe bekannt (z.B. der Farbstoff namens DENDRA (vgl. Gurskaya et al., Nature Biotech., Band 24, S. 461-465, 2006)), bei denen die Aktivierung und Fluoreszenzanregung bei ein- und derselben Wellenlänge erfolgen kann. Dann genügt ein Laser.

Ein akustisch-optischer Filter 12 dient zur Wellenlängenselektion und zum schnellen Schalten oder Abschwächen einzelner Laserwellenlängen. Eine Optik 13 fokussiert die Strahlung über einen (z. B. dichroitischen) Strahlteiler 14 in eine Pupille eines Objektivs 15, so dass auf der Probe 7 die Strahlung der Strahlungsquelle 8 als Weitfeldbeleuchtung einfällt.

In der Probe 7 entstehende Fluoreszenzstrahlung wird in einem Detektionsstrahlengang 21 geleitet eingesammelt. Der Strahlteiler 14 ist dazu so ausgelegt, dass er die Fluoreszenzstrahlung passieren läßt, so dass sie durch ein Filter 16 zu einer Tubuslinse 17 gelangt, so dass insgesamt die fluoreszierende Probe 7 auf den Detektor 5 abgebildet wird.

Zur Steuerung des Betriebs des Mikroskops 6 ist eine Steuereinrichtung vorgesehen, hier als Computer 18 mit Anzeige 19 und Tastatur 20 ausgebildet. Die Verfahrensschritte S2 bis S6 erfolgen im Computer 18. Dabei ist die Bildrate des Matrix-Detektors ausschlaggebend für die Gesamtmeßzeit, so dass ein Matrix-Detektor 5 mit möglichst hoher Bildrate vorteilhaft ist, um die Meßzeit zu reduzieren.

Das beschriebene Verfahren realisiert mit dem Mikroskop 6 ein Gesamtbild, das z.B. eine um Faktor 10 gegenüber der optischen Auflösung des Mikroskops gesteigerte Ortsauflösung hat. Die optische Auflösung des Mikroskops 6 kann beispielsweise 250 nm lateral und 500 nm axial betragen.

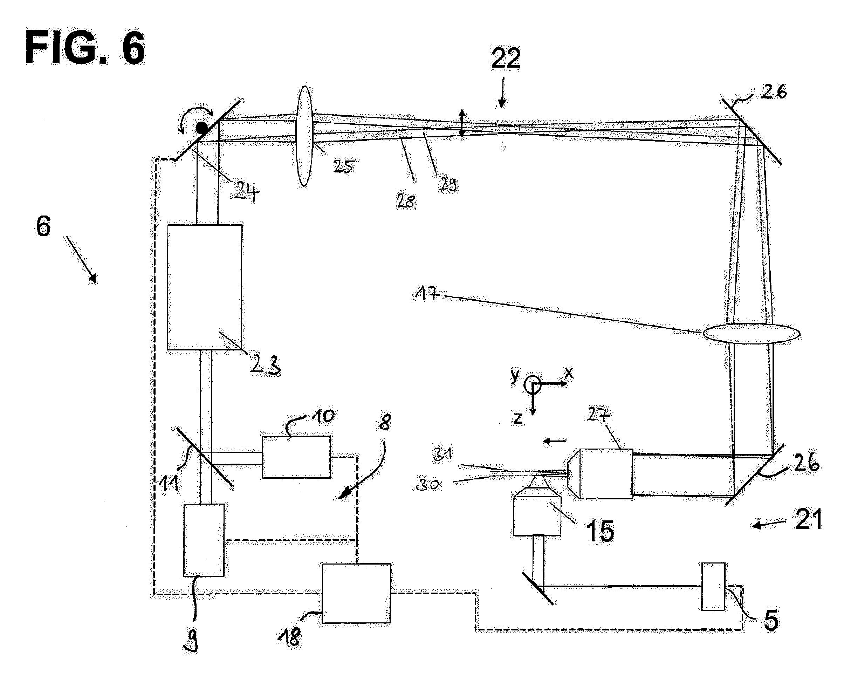

Die vorstehend beschriebene Verfahrensweise bzw. das erläuterte Mikroskop erreicht Hochauflösung, also eine über die Beugungsgrenze gesteigerte optische Auflösung in einer Ebene senkrecht zur Einfallsstrahlung. Um nun eine Hochauflösung auch längs der Einfallsrichtung, also in Tiefenrichtung (üblicherweise als z-Koordinate bezeichnet) zu erreichen, ist die in Fig. 5 lediglich schematisch dargestellte Beleuchtung der Probe mit Anregungs- bzw. Aktivierungsstrahlung so ausgebildet, das sie abwechselnd zwei unterschiedliche Tiefenbereiche der Probe beleuchtet, die in Tiefenrichtung hintereinander liegen und sich überlappen. Einen exemplarischen Aufbau hierfür zeigt die Fig. 6 Elemente, die strukturell oder funktionell bereits erläutert wurden, sind mit den selben Bezugszeichen wie in Fig. 5 versehen, so dass ihre Beschreibung nicht noch einmal wiederholt werden muß.

Der Beleuchtungsstrahlengang 22 ist nun so ausgebildet, dass die Beleuchtung seitlich in die Probe in Form eines Lichtblattes eingeleitet wird. Dazu ist der Strahlungsquelle 8 ein Strahlungsanpassungssystem 23 nachgeschaltet, das die Strahlung auf einen verstellbaren Spiegel 24, üblicherweise einen Galvo-Scanner, leitet. Dieser wird verschwenkt, z. B. zwischen zwei Stellungen und leitet die derart unterschiedlich abgelenkte Strahlung zu einem Scanobjektiv 25. Es liegt dann ein Strahlengang vor, der je nach Stellung des Spiegels 24 z. B. in zwei unterschiedliche Positionen 28 und 29 ausgelenkt ist. Das Strahlanpassungssystem 23 kann beispielsweise eine Zylinderlinse beinhalten, die zur Formung des Lichtblatts verwendet wird. Weiter können hier zoomoptische Elemente angeordnet sein, die das Lichtblatt hinsichtlich seiner Ausdehnung in z und y anpassen. Auch können intensitätsregulierende Elemente (AOTF, Filter) vorgesehen sein, die ein Regeln der Strahlintensität zulassen. Der Spiegel 24 kann auch als Spiegelgruppe realisiert sein, die hinter dem Scanobjektiv 25 eine Strahlauslenkung nicht nur in die Positionen 28 und 29 (parallel zur Zeichnungsebene), sondern auch in Positionen senkrecht zur Zeichnungsebene zuläßt. In einer solchen Ausgestaltung kann auch auf eine Zylinderoptik verzichtet werden, da das Lichtblatt quasi durch ein zeitliches Abrastern in y-Richtung erzeugt wird. Dabei ist das Abrastern deutlich schneller als es der zeitlichen Auflösung der Detektion entspricht.

Über einen Umlenkspiegel 26, die Tubuslinse 17 sowie einen weiteren Umlenkspiegel 26 gelangt die Strahlung zu einem Beleuchtungsobjektiv 27, das die Strahlung senkrecht zur Tiefenrichtung der Probenabbildung, d.h. in einer x/y-Ebene in die Probe (die nicht dargestellt ist) einleitet. Das Koordinatensystem ist exemplarisch in Fig. 6 eingetragen. Für zwei Stellungen des verstellbaren Spiegels 24 ergeben sich damit zwei Lichtblätter 30, 31, welche die Probe beispielsweise mit Anregungsstrahlung beleuchten.

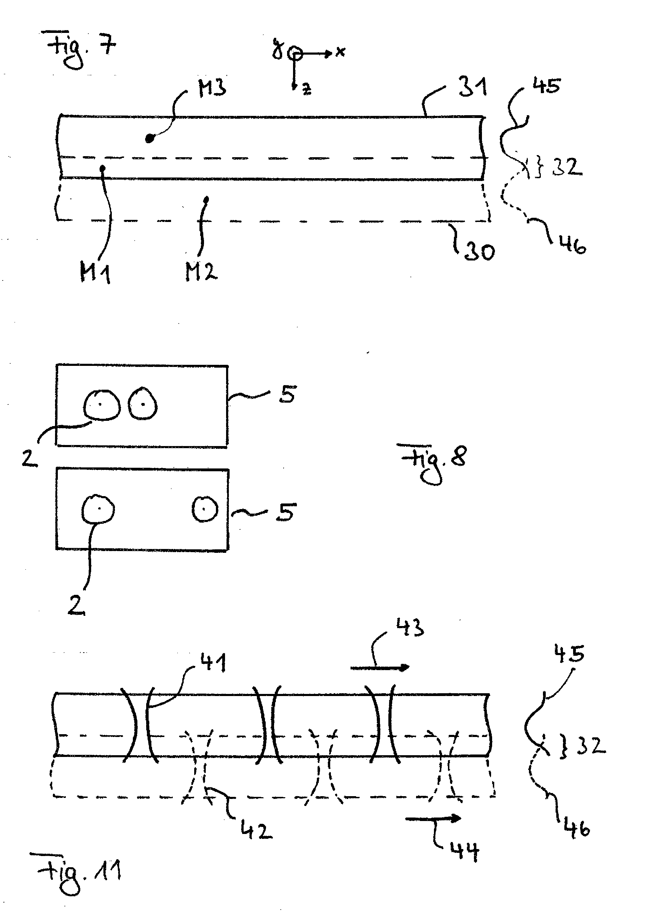

Die Lichtblätter 30 und 31 sind in Fig. 7 vergrößert dargestellt. Sie sind in z-Richtung gegeneinander versetzt. Jedes Lichtblatt hat in z-Richtung eine Intensitätsverteilung. Tatsächlich sind die Lichtblätter 30 und 31 sehr langgestreckte Strahltaillen, in Fig. 7 ist diese Taille zur Vereinfachung durch parallele Begrenzung des Lichtblattes wiedergegeben. Die Intensitätsverteilung 46 des Lichtblattes 30 überschneidet sich nun mit der Intensitätsverteilung 45 des Lichtblattes 31, so dass ein Überlapp 32 gegeben ist. In diesem Überlapp 32 wird die Probe bei abwechselndem Ab- und Ausschalten der Lichtblätter 30 und 31 durch beide Lichtblätter beleuchtet.

Dies führt dazu, wie in Fig. 8 dargestellt ist, dass nur in diesem Überlapp 32 liegende Markierungsmoleküle bei beiden Beleuchtungszuständen Fluoreszenzstrahlung zeigen, d.h. sowohl wenn das Lichtblatt 30 eingeschaltet ist, als auch wenn das Lichtblatt 30 abgeschaltet und das Lichtblatt 31 aktiviert ist. Schematisch ist dies in Fig. 8 eingetragen. Sie zeigt eine Draufsicht auf die Bildebene des Detektors 5. Im oberen Bild der Fig. 8 ist das Lichtblatt 31 eingeschaltet und das Lichtblatt 30 ausgeschaltet. In der unteren Draufsicht auf den Detektor 5 ist hingegen das Lichtblatt 30 aktiviert und das Lichtblatt 31 dunkel. Wie zu sehen ist, zeigt sich nur bei einem Markierungsmolekül M1, das in Fig. 7 im Überlapp 32 der Lichtblätter 30 und 31 eingezeichnet ist, ein Beugungsscheibchen in beiden Bildern. Ein Markierungsmolekül M2, das im Lichtblatt 30, aber unterhalb des Überlapps 32 liegt, erscheint nur im unteren Bild. Ein Markierungsmolekül M3, das hingegen nur im Lichtblatt 31 liegt, ist nur im oberen Bild zu sehen.

Durch entsprechende Einstellung des Winkelunterschiedes der beiden Kippstellungen des verstellbaren Spiegels 34 kann der Abstand der Lichtblätter justiert werden. Da zugleich die Dicke der Lichtblätter in z-Richtung bekannt ist, kann auf diese Weise die Größe des Überlapps 32 in z-Richtung justiert werden. Somit kann auch bei typischen Lichtblattdicken von 1 µm eine sehr viel genauere Angabe der Tiefenposition eines lumineszierenden Markierungsmoleküls gewonnen werden. Die Auflösung in Tiefenrichtung hängt dabei mit der Ausdehnung des Überlapps 32 in z-Richtung zusammen. Wie nachfolgend noch erläutert werden wird, gibt es auch Möglichkeiten, die Auflösung noch zu steigern.

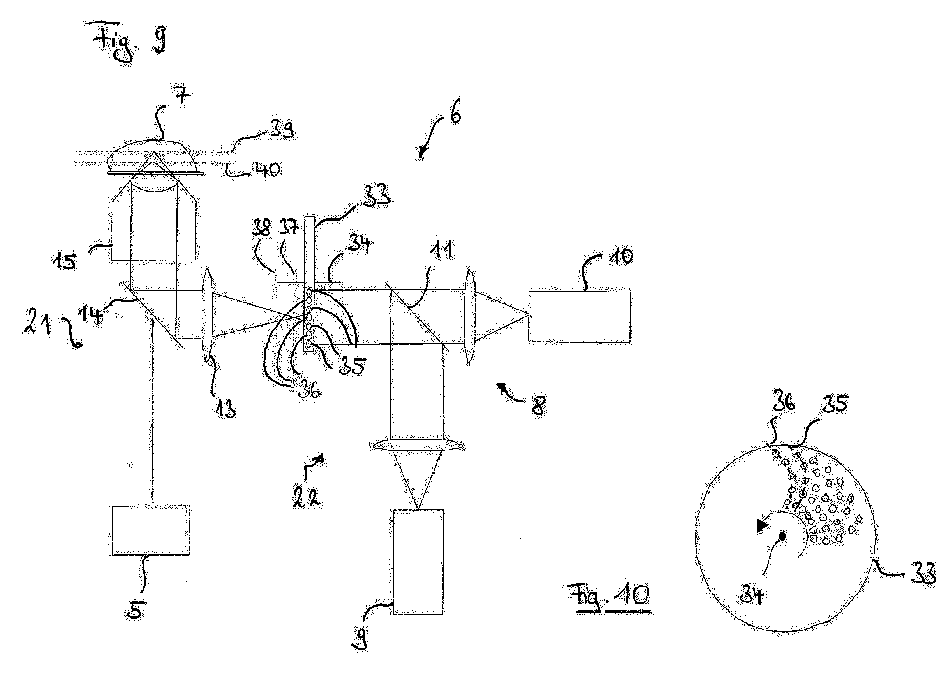

Fig. 9 zeigt ein Mikroskop 6 einer weiteren Bauweise, das ebenfalls eine Tiefenauflösung bei der PAL-Mikroskopie erreicht. In der Bauweise der Fig. 9 werden die hintereinander liegenden und überlappenden Tiefenschärfebereiche der Beleuchtung mit Anregungsstrahlung in einer Auflichtkonfiguration des Beleuchtungsstrahlenganges 22 erzeugt. Dabei ist im Beleuchtungsstrahlengang 22, der ähnlich wie der der Fig. 6 ausgebildet ist, eine Minilinsendrehscheibe 33 angeordnet, die um eine außerhalb der optischen Achse liegende Achse 34 rotiert. Auf der Minilinsendrehscheibe 33, die von ihrer Funktion im Strahlengang einer bekannten Nipkov-Scheibe entspricht, befinden sich anstelle der in der Nipkov-Scheibe vorgesehenen Löcher Minilinsen 35, 36. Dabei wechseln sich Minilinsen 35 erster Brennweite mit Minilinsen 36 einer zweiten Brennweite ab. Die unterschiedlichen Brennweiten sorgen dafür, dass die Probe mit Strahlung in zwei verschiedenen, längs der optischen Achse beabstandeten Fokusebenen 37, 38 beleuchtet wird, wodurch in der Probe die Foki ebenfalls in zwei, nun in Tiefenrichtung beabstandete Fokusebenen 39 und 40 eingekoppelt werden.

Fig. 10 zeigt in einer Draufsicht die Minilinsendrehscheibe 33 sowie die Anordnung der Minilinsen 35, die eine erste Brennweite haben, und die Minilinsen 36 mit zweiter Brennweite.

Die Wirkung dieses Aufbaus bzw. die dadurch erreichte Beleuchtung ist schematisch in Fig. 11 dargestellt. Es ist zu sehen, dass mehrere Foki 41 in der Fokusebene 39 und in Richtung eines Pfeiles 43 durch die Probe durchlaufen. Synchron und zeitlich versetzt dazu laufen Foki 46 parallel dazu, also in Richtung des Pfeiles 44, in der Fokusebene 40 durch. Da jeder Fokus eine Intensitätsverteilung hat, die schematisch bei 45 für die Foki 41 und 46 für die Foki 42 eingezeichnet ist, ergibt sich im Resultat wiederum ein Überlapp 32.

Der Überlapp 32 bei der Ausführungsform der Fig. 9 wird durch die Minilinsendrehscheibe 33 vorgegeben. Zusätzlich kann dem Strahlteiler 14 im Beleuchtungsstrahlengang eine Zoomoptik vorgeordnet werden, die es ebenfalls erlaubt den Versatz zwischen den Fokusebenen 39 und 40 und damit den Überlapp-Bereich 32 einzustellen. Die Bauweise der Fig. 9 erreicht im Sinne der Detektion eine simultane Beleuchtung in den Fokusebenen 39 und 40, da die Foki längs der Pfeile 43, 44 deutlich schneller wandern, als es die Detektion auflösen könnte.

Die Mini-Linsen-Drehscheibe ist üblicherweise so aufgebaut, dass pro Umdrehung z (z.B. 12) Bilder gerastert werden, also z wiederkehrende Linsenanordnungen auf der Scheibe angeordnet sind. Die Bildaufnahme wird so auf die Rotation der Scheibe synchronisiert, dass genau 1 bis n Rastervorgänge durch Scheibenrotation mit einer Bildaufnahme zusammenfallen. n ist dabei ein ganzzahliger Teil von z. Für den hier vorliegenden Fall hat z.B. jede zweite der wiederkehrenden Linsenanordnungen (oder je nach zu erwartender Kamera-Bildrate auch z.B. die zweiten 6 von 12 etc.) eine andere Brennweite; bei ähnlicher Synchronisation wie oben wird so erreicht, dass jeweils ein Bild mit Beleuchtung "oben" und eines mit Beleuchtung "unten" aufgenommen wird; so ist die entsprechende Zuordnung der Bilder zu den Beleuchtungszuständen gegeben.

Die Erzeugung hintereinander liegender Probenbereiche durch Abscannen mit in beanstandete Fokusebenen gebündelten Foki hat nicht nur den Vorteil, dass eine Auflichtbeleuchtungskonfiguration gewählt werden kann, sondern ermöglicht vorzugsweise noch eine Weiterbildung dahingehend, dass die eingekoppelte Strahlung, beispielsweise die Anregungsstrahlung, einen 2-Photonen-Effekt ausnutzt. Ein solcher Effekt schärft bekanntermaßen die Intensitätsverteilung durch Quadrieren und erlaubt es, den Überlapp 32 präzise auf ein sehr geringes Maß einzustellen. Entsprechend ist auch die Lokalisierung in Tiefenrichtung hoch genau. Zudem werden nicht für die Abbildung vorgesehene Probenbereiche nicht durch Strahlung belastet, was bekanntermaßen zum Bleichen von Markierungsmolekülen etc. führen könnte.

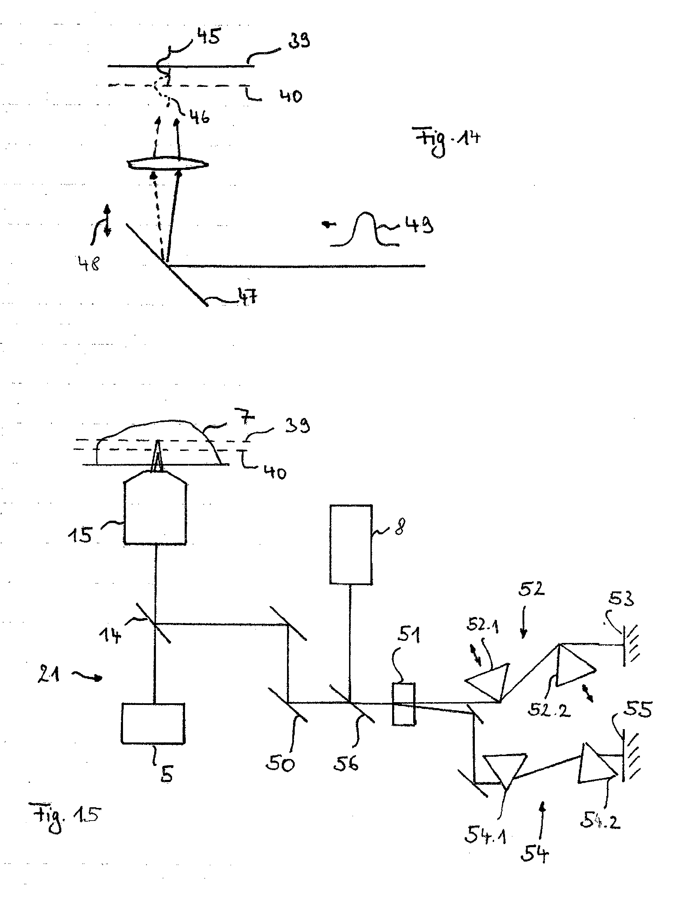

In einer weiteren Bauweise kann die Erzeugung zweier unterschiedlicher in Tiefenrichtung gestaffelter Tiefenschärfebereiche auch unter Verwendung eines diffraktiven Elementes (DOE) vorgenommen werden, das in die Probe abgebildet wird. Dies ist schematisch in Fig. 14 gezeigt. Das diffraktive optische Element 47 wird dabei einer Verschiebung 48 unterworfen. Gleichzeitig wird es mit einer Ausgangsintensitätsverteilung 49 bestrahlt. Je nach Verschiebung 48 wird die entsprechende Fokusebene, die mit Hilfe des diffraktiven optischen Elementes 47 erreicht wird, in z-Richtung verschoben, so dass sich wiederum die Fokusebenen 39 und 40 für die dann vorliegenden Intensitätsverteilungen 45 und 46 ergeben.

Die Lokalisierung in Tiefenrichtung erfolgt erfindungsgemäß bereits dadurch dass Moleküle, die nicht im Überlapp 32 liegen, ausgeschieden werden, da sie nur in einem der beiden Bilder, d.h. nur für einen der beiden Beleuchtungszustände erscheinen. Die Ortsauflösung ist dann im wesentlichen durch die Ausdehnung des Überlapps 32 definiert.

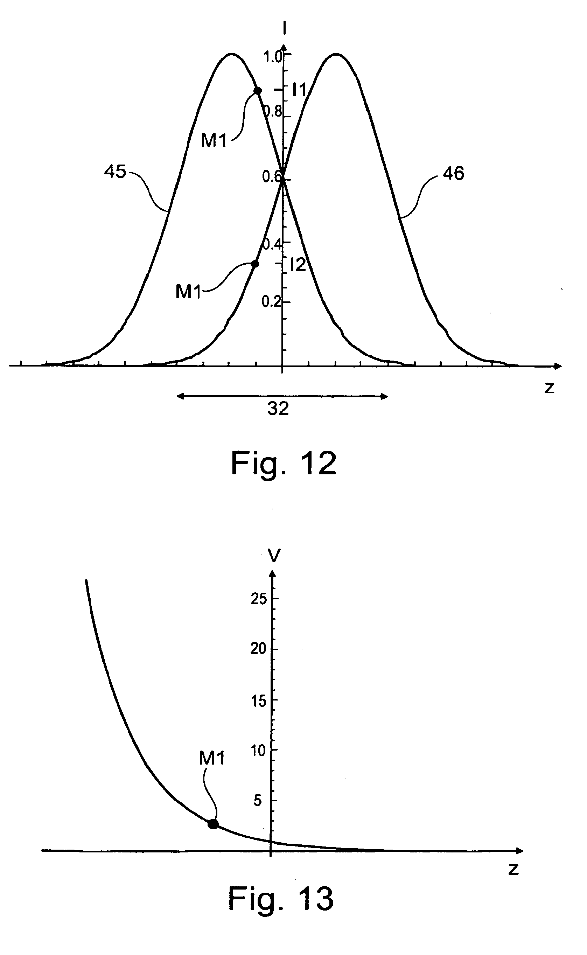

In einer Weiterbildung ist es möglich, die Ortsauflösung noch zu steigern. Dazu wird ausgenützt, dass die Lumineszenzintensität mit der Anregungsintensität steigt. Das erlaubt es, die Intensitätsverteilung der zwei Beleuchtungszustände ausgenutzt. Fig. 12 zeigt die Intensitätsverteilungen 45 und 46 entlang der Tiefenrichtung (z-Koordinate). Die Intensität I der Intensitätsverteilungen 45 und 46 überdecken sich im Überlapp 32. Ein in diesem Bereich liegendes Markierungsmolekül M1 wird mit einer ersten Intensität I1 aufgezeichnet, wenn es durch den Beleuchtungszustand mit der Intensitätsverteilung 45 zur Abgabe von Lumineszenzstrahlung angeregt wird. Wird es hingegen mit dem Beleuchtungszustand gemäß Intensitätsverteilung 46 beleuchtet, nimmt der Detektor 5 das Markierungsmolekül M1 mit der Intensität I2 wahr. I1 ist aufgrund der Lage des Markierungsmoleküls M1, die außerhalb des Zentrum des Überlapp-Bereiches ist, geringer. Es werden deshalb optional die Intensitätsunterschiede eines angeregten Markierungsmoleküls zur Bestimmung der Tiefenlage herangezogen.

Ein mögliches Vorgehen ergibt sich aus Fig. 13. Dort ist das Verhältnis der Intensitäten I1 und I2 als Funktion der z-Koordinate aufgetragen. Man sieht, dass die Tiefenkoordinate für das Molekül M1 mit einer Auflösung angegeben werden kann, die sehr viel kleiner ist als die Abmessung des Überlapps 32. Natürlich kann anstelle der Verhältnisbildung auch eine andersartige Auswertung der Intensitätsunterschiede zwischen I1 und I2 verwendet werden.

Es sei auch erwähnt, dass bei zeitlicher Unterscheidung der beiden Anregungsbereiche auch die Anregungsintensität von einem Bereich zum anderen adaptiv variiert werden kann, und die Änderung der Anregungsintensität in die Auswertung mit einbezogen wird. Dies kann vorteilhaft sein, um eine bessere Rauschstatistik zu erhalten bzw. den gesamten Dynamikbereich der Messung zu erhöhen.

Eine weitere Möglichkeit, die zwei Beleuchtungszustände in unterschiedlichen z-Lagen in der Probe zu erzeugen, ist in Fig. 15 schematisch dargestellt. Hier werden im Beleuchtungsstrahlengang zwei Strahlwege mit unterschiedlicher Dispersion der Gruppengeschwindigkeit vorgesehen. Diese beiden Strahlengänge werden mittels Prismenpaaren 52 und 54 realisiert. Die Strahlung aus der Strahlquelle 9 wird über einen Strahlteiler 56 und ein AOTF 51, das hier ein Beispiel für ein schaltendes Element ist, zwischen den Prismenpaaren 52 und 54 hin und her geschaltet. In jedem der beiden Strahlengänge durchläuft die Strahlung ein Prismenpaar 52.1 und 52.2 bzw. 54.1 und 54.2, wird an einem Endspiegel 53 bzw. 55 reflektiert und gelangt über ein Gitter 50 zum Strahlteiler 14. Die unterschiedlichen Dispersionen der Gruppengeschwindigkeiten führen bei der Abbildung über das Gitter 50 zu den zwei unterschiedlichen Fokusebenen 39 und 40 in der Probe 7.

Der Wechsel zwischen den beiden Fokusebenen erfolgt wiederum synchronisiert zur Bildaufnahme im Detektionsstrahlengang 21. Die optionale Verschiebbarkeit des Prismenpaares 52 erlaubt es, den Dispersionsunterschied einzustellen.

Die Detektion der zwei Bilder, welche den beiden Beleuchtungszuständen zugeordnet sind, kann mit einer Kamera ausgeführt werden, die entsprechend synchronisiert ausgelesen wird. Zur Beschleunigung des Verfahrens ist es vorteilhaft, zwei Kameras in den Detektionsstrahlengang über einen entsprechenden Strahlteiler einzuspiegeln. Insbesondere kann damit eine Totzeit, welche üblicherweise bei der Kameraauslesung auftritt, reduziert werden.

Das Prinzip unterschiedliche Beleuchtungszustände mit sich in der Tiefenlage unterscheidenden Tiefenschärfebereichen, welche sich überlappen, vorzusehen, ist natürlich nicht auf zwei Zustände beschränkt. Natürlich können auch mehrere hintereinanderliegende Tiefenbereiche verwendet werden, die sich paarweise überlappen und/oder mit unterschiedlicher Modulationsfrequenz moduliert werden. Gleiches gilt natürlich hinsichtlich des Umschaltens zwischen den Bereichen. Es muß kein exklusives Ein- und Ausschalten vorgenommen werden. Es ist durchaus auch möglich, die Beleuchtungsbereiche mit unterschiedlichen Modulationsfrequenzen zu modulieren. Die Tiefenlage wird dann aus dem Beat-Signal, z. B. mittels einer Lock-in-Detektion gewonnen.

Die Erzeugung des Lichtblattes kann im übrigen mit der sogenannten Bessel-SPIM-Technik kombiniert werden, wie sie aus der Fahrbach, F. O., Rohrbach, A., "A line scanned light-sheet microscope with phase shaped self-reconstructing beams", Optics Express 24229, Vol. 18, Nr. 23, 2010 bekannt ist.

Für die verschiedenen Ausführungsformen kommen folgende Weiterbildungen in Betracht bzw. gelten folgende Vorteile:
Für die Umschaltung zwischen den Beleuchtungszuständen, insbesondere bei der seitlichen Beleuchtung mittels eines Lichtblattes kommen Galvanometerscanner, akustisch optische Modulatoren oder Filter und/oder schaltbare Phasenelemente in Frage.

Die Bildaufnahme bzw. Auswertung ist auf die unterschiedlichen Beleuchtungszustände abgestimmt. Dies kann durch eine Synchronisierung erfolgen. Es sind aber auch frequenzauswertende Ansätze möglich, indem die beiden Beleuchtungszustände unterschiedlich moduliert werden, insbesondere zeitlich.

Die beschriebenen Ausführungsformen verbessern die Eindringtiefe der mikroskopischen Abbildung, die bei herkömmlicher PAL-Mikroskopie mit TIRF-Beleuchtung auf die unmittelbare Probengrenzschicht beschränkt ist. Es wird eine hochauflösende dreidimensionale Abbildung erreicht. Zugleich ist der Kontrast durch Unterdrückung eines außerhalb des Fokusbereichs stammenden Untergrundsignals verbessert. Die dreidimensionale Auflösungssteigerung wird dabei dadurch erreicht, dass das Lokalisationsverfahren auch in z-Richtung wirkt.

Alternativ zu den oben beschriebenen Ansätzen mit einer Verschiebung der Ebene der Beleuchtung sei darauf hingewiesen, dass es letztlich nur auf eine Relativverschiebung der Beleuchtungsebene in der Probe ankommt. Diese kann natürlich auch durch eine geeignete Probenbewegung realisiert werden.

Durch das erläuterte Vorgehen ist nicht nur eine schnellere Bildaufnahme erreicht; die für ein übliches Objektiv gut bekannte Punktbildverwaschungsfunktion in z-Richtung führt gleichzeitig zu einer besseren Bildgewinnung bei der Lokalisation. Insbesondere ist kein Unterschied der Punktbildverwaschungsfunktion in z-Richtung und in x/y-Richtung gegeben, da die im Stand der Technik für die hochauflösende 3D-Mikroskopie geschilderten astigmatischen Linsen etc. nicht benötigt werden.

Die Beleuchtungsintensität kann während der Bildaufnahme verstellt und insbesondere nachgeregelt werden. Damit kann erreicht werden, dass das Signal-zu-Rausch-Verhältnis an verschiedenen Bereichen der Probe sich nicht ändert.

Bei der Verwendung eines Lichtblattes kann die Verteilung der Intensität in z-Richtung der Abbildung modifiziert werden, um das Lichtblatt in dieser Richtung zu strukturieren. Damit kann ein Negativbild der Probe gewonnen werden. Auch ist es möglich, Sättigungseffekte besser auszunutzen.

Zur Erzeugung der Beleuchtungszustände, die in z-Richtung unterschiedlich strukturiert sind, kommt auch eine interferometrische Überlagerung unterschiedlicher Lichtblätter oder Beleuchtungszustände in Frage.

Das erläuterte Vorgehen ermöglicht weiter die Auswertung von Kreuzkorrelationen zwischen Signalen an verschiedenen Probenorten.

## Patentansprüche

1. Verfahren zur hochauflösenden Lumineszenzmikroskopie einer Probe (7), die mit Markierungsmolekülen (1) markiert ist, welche derart aktivierbar sind, dass sie erst aktiviert zur Abgabe bestimmter Lumineszenzstrahlung anregbar sind, wobei das Verfahren folgende Schritte aufweist:
a) Aktivieren und Anregen einer Teilmenge der in der Probe (7) vorhandenen Markierungsmoleküle (1) zur Abgabe von Lumineszenzstrahlung, wobei in der Probe mindestens ein Teil der lumineszierenden Markierungsmoleküle (1) zu den ihnen nächst benachbarten lumineszierenden Markierungsmolekülen (1) mindestens einen Abstand haben, der größer oder gleich einer Länge ist, welche sich aus einer vorbestimmten optischen Auflösung ergibt,
b) Aufnahme eines Bildes der Probe (7) mit lumineszierenden Markierungsmolekülen (1) längs einer Tiefenrichtung und mit der vorbestimmten optischen Auflösung, wobei die Schritte a) und b) wiederholt durchgeführt werden, und
c) Erzeugen von Einzelbildern aus den Bildern aus Schritt b), wobei in den Einzelbildern die geometrischen Orte der lumineszierenden Markierungsmoleküle (1) mit einer über die vorbestimmte optische Auflösung gesteigerten Ortsauflösung ermittelt werden,
wobei zur Hochauflösung längs der Tiefenrichtung
d) die Aktivierung und/oder Anregung in den Schritten a) mit einer Strahlung erfolgt, die in mindestens zwei Bereiche eingebracht wird, wobei
- die Bereiche (30, 31) sich jeweils längs einer Ebene (39, 40) erstrecken, die im wesentlichen senkrecht zur Tiefenrichtung liegt,
- die Bereiche (30, 31) in Tiefenrichtung eine vorbestimmte Ausdehnung haben und
- die Bereiche (30, 31) so angeordnet sind, dass sie in Tiefenrichtung gesehen hintereinander liegen und sich nur teilweise überlappen, und
e) in den Schritten b) getrennte Bilder der Probe (7) bei Aktivierung und/oder Anregung jedes der Bereiche (30, 31) aufgenommen werden, um aus den getrennten Bildern eine Tiefeninformation der lumineszierenden Markierungsmoleküle (1) zu gewinnen, wobei diejenigen lumineszierenden Markierungsmoleküle (1) herausgefiltert werden, die in beiden getrennten Bildern erscheinen.

2. Verfahren nach Anspruch 1, **dadurch gekennzeichnet, dass** Lumineszenzintensitäten der herausgefilterten Markierungsmoleküle (1) in den beiden Bildern verglichen werden und daraus eine Tiefenangabe abgeleitet wird.

3. Verfahren nach einem der Ansprüche 1 oder 2, **dadurch gekennzeichnet, dass** in Schritt d) die Strahlung in Form mindestens eines quer zur Tiefenrichtung eingestrahlten Lichtblattes (30, 31) eingebracht wird, dessen Dicke die Ausdehnung festlegt, wobei vorzugsweise die Dicke des Lichtblattes beugungsbegrenzt ist.

4. Verfahren nach Anspruch 3, **dadurch gekennzeichnet, dass** das Lichtblatt (30, 31) quer zur Tiefenrichtung relativ zur Probe in mindestens zwei Stellungen verschoben wird.

5. Verfahren nach Anspruch 3, **dadurch gekennzeichnet, dass** zwei beabstandete Lichtblätter (30, 31) verwendet werden, die abwechselnd ein- und ausgeschaltet oder unterschiedlich moduliert werden.

6. Verfahren nach einem der Ansprüche 1 oder 2, **dadurch gekennzeichnet, dass** in Schritt d) die Strahlung längs der Tiefenrichtung in Form mindestens eines Paares beugungsbegrenzter Foki (41, 42) eingestrahlt wird, wobei ein erster Fokus (41) des Paares in eine erste (39) der zwei Ebenen und ein zweiter Fokus des Paares (41) in die zweite (42) der zwei Ebenen fokussiert wird, die Foki (41, 42) längs der jeweiligen Ebenen (39, 40) verschoben werden, um die zwei Bereiche zu bilden, und die Tiefenschärfe der Fokussierung die Ausdehnung der Bereiche festlegt.

7. Mikroskop zur hochauflösenden Lumineszenzmikroskopie einer Probe (7), die mit Markierungsmolekülen (1) markiert ist, welche derart aktivierbar sind, dass sie erst aktiviert zur Abgabe bestimmter Lumineszenzstrahlung anregbar sind, wobei das Mikroskop aufweist:
a) einen Beleuchtungsstrahlengang (22), ausgebildet zum wiederholten Aktivieren und Anregen einer Teilmenge der in der Probe (7) vorhandenen Markierungsmoleküle (1) zur Abgabe von Lumineszenzstrahlung derart, dass in der Probe (7) mindestens ein Teil der lumineszierenden Markierungsmoleküle (1) zu den ihnen nächst benachbarten lumineszierende Markierungsmoleküle (1) mindestens einen Abstand haben, der größer oder gleich einer Länge ist, welche sich aus einer vorbestimmten optischen Auflösung ergibt,
b) eine Abbildungseinrichtung (21), ausgebildet zur wiederholten Aufnahme eines Bildes der Probe (7) mit lumineszierenden Markierungsmolekülen (1) längs einer Tiefenrichtung und mit der vorbestimmten optischen Auflösung und
c) eine Steuer- und Auswerteeinrichtung (18), die Einzelbilder aus den Bildern erzeugt und in den Einzelbildern die geometrischen Orte der lumineszierenden Markierungsmoleküle (1) mit einer über die vorbestimmte optische Auflösung gesteigerten Ortsauflösung ermittelt,
wobei zur Hochauflösung längs der Tiefenrichtung
d) der Beleuchtungsstrahlengang (22) die Aktivierungs- und/oder Anregungsstrahlung in mindestens zwei Bereiche (30, 31) einbringt, wobei
- die Bereiche (30, 31) sich jeweils längs einer Ebene (39, 40) erstrecken, die im wesentlichen senkrecht zur Tiefenrichtung liegt,
- die Bereiche (30, 31) in Tiefenrichtung eine vorbestimmte Ausdehnung haben und
- die Bereiche (30, 31) so angeordnet sind, dass sie in Tiefenrichtung gesehen hintereinander liegen und sich nur teilweise überlappen, und
e) die Abbildungseinrichtung (21) getrennte Bilder der Probe bei Aktivierung und/oder Anregung jedes der mindestens zwei Bereiche (30, 31) aufnimmt und die Steuer- und Auswerteeinrichtung aus den getrennten Bildern eine Tiefeninformation der lumineszierenden Markierungsmoleküle (1) gewinnt, wobei die Steuer- und Auswerteeinrichtung (18) dazu ausgebildet ist, das Mikroskop (6) zur Ausführung eines Verfahrens gemäß Anspruch 1 bis 6 anzusteuern..

8. Mikroskop nach Anspruche 7, **dadurch gekennzeichnet, dass** der Beleuchtungsstrahlengang (22) die Aktivierungs- und/oder Anregungsstrahlung in Form mindestens eines quer zur Tiefenrichtung liegenden Lichtblattes (30, 31) einstrahlt, dessen Dicke die Ausdehnung festlegt, wobei vorzugsweise die Dicke des Lichtblattes (30, 31) beugungsbegrenzt ist.

9. Mikroskop nach Anspruch 8, **dadurch gekennzeichnet, dass** der Beleuchtungsstrahlengang (22) eine Einrichtung (24) aufweist, die das Lichtblatt (30, 31) quer zur Tiefenrichtung in mindestens zwei Stellungen verschiebt.

10. Mikroskop nach Anspruch 8, **dadurch gekennzeichnet, dass** der Beleuchtungsstrahlengang (22) zwei beabstandete, abwechselnd ein- und ausgeschaltete oder unterschiedlich modulierte Lichtblätter einstrahlt.

11. Mikroskop nach einem der Ansprüche 8 bis 10, **dadurch gekennzeichnet, dass** der Beleuchtungsstrahlengang (22) die Aktivierungs- und/oder Anregungsstrahlung längs der Tiefenrichtung in Form mindestens eines Paares beugungsbegrenzter Foki (41, 42) einstrahlt, einen erster Fokus (41) des Paares in eine erste (39) der zwei Ebenen und einen zweiten Fokus (42) des Paares in die zweite (40) der zwei Ebenen fokussiert, und die Foki (41, 42) längs der jeweiligen Ebenen (39, 40) verschiebt, um die zwei Bereiche zu bilden, wobei die Tiefenschärfe der Fokussierung die Ausdehnung der Bereiche festlegt.

12. Mikroskop nach Anspruch 11, **dadurch gekennzeichnet, dass** der Beleuchtungsstrahlengang (22) ein auf einer rotierenden Scheibe (33) angeordnetes Minilinsenarray (35, 36) umfaßt.

## Claims

1. A method for high-resolution luminescence microscopy of a sample (7) that is labelled with label molecules (1) that can be activated in such a way that they are first activated so they can be excited to emit particular luminescence radiation, wherein the method comprises the following steps:
a) activation and excitation of a subset of the label molecules (1) present in the sample (7) to emit luminescence radiation, wherein in the sample at least some of the luminescing label molecules (1) have a distance to their closest neighbouring luminescing label molecules (1) that is at least greater than or equal to a length which results from a predetermined optical resolution,
b) recording an image of the sample (7) with luminescing label molecules (1) along a depth direction and with the predetermined optical resolution, wherein the steps a) and b) are carried out repeatedly, and
c) generation of individual images from the images from step b), wherein in the individual images the geometric locations of the luminescing label molecules (1) are identified with a spatial resolution increased above the predetermined optical resolution,
wherein for the high resolution along the depth direction
d) the activation and/or excitation in the steps a) is performed with a radiation that is introduced into at least two regions, wherein
- the regions (30, 31) extend respectively along a plane (39, 40) that lies substantially perpendicular to the depth direction,
- the regions (30, 31) have a predetermined extent in the depth direction, and
- the regions (30, 31) are arranged so that seen in the depth direction they lie behind one another and only partly overlap, and
e) in the steps b) separate images of the sample (7) are recorded during activation and/or excitation of each of the regions (30, 31) in order to be able to obtain from the separate images a depth information of the luminescing label molecules (1), wherein those luminescing label molecules (1) are filtered out that appear in both separate images.

2. The method according to claim 1, **characterised in that** luminescence intensities of the filtered-out label molecules (1) are compared in the two images and from this a depth value is derived.

3. The method according to one of claims 1 or 2, **characterised in that** in step d) the radiation is introduced in the form of at least one sheet of light (30, 31) transverse to the depth direction, whose thickness defines the extent, wherein preferably the thickness of the sheet of light is diffraction-restricted.

4. The method according to claim 3, **characterised in that** the sheet of light (30, 31) transverse to the depth direction is displaced relative to the sample in at least two positions.

5. Method according to claim 3, **characterised in that** two spaced-apart sheets of light (30, 31) are used, which are alternately switched on and off or are differently modulated.

6. The method according to one of claims 1 or 2, **characterised in that** in step d) the radiation is introduced along the depth direction in the form of at least a pair of diffraction-restricted foci (41, 42) wherein a first focus (41) of the pair is focussed in a first (39) of the two planes and a second focus of the pair (41) is focussed in the second (42) of the two planes, the foci (41, 42) are displaced along the respective planes (39, 40) in order to form two regions, and the depth sharpness of the focussing defines the extent of the regions.

7. A microscope for high-resolution luminescence microscopy of a sample (7) that is labelled with label molecules (1) that can be activated in such a way that they are first activated so they can be excited to emit particular luminescence radiation, wherein the microscope comprises:
a) an illuminating beam path (22) formed for the repeated activation and excitation of a subset of the label molecules (1) present in the sample (7) for the emission of luminescence radiation, so that in the sample (7) at least some of the luminescing label molecules (1) have a distance to their closest neighbouring luminescing label molecules (1) that is greater than or equal to a length which results from a predetermined optical resolution,
b) an imaging device (21) formed for the repeated recording of an image of the sample (7) with luminescing label molecules (1) along a depth direction and with the predetermined optical resolution and
c) a control and evaluation device (18) that generates individual images from the images and in the individual images determines the geometric locations of the luminescing label molecules (1) with a spatial resolution increased above the predetermined optical resolution, wherein for the height resolution along the depth direction
d) the illuminating beam path (22) introduces the activation and/or excitation radiation into at least two regions (30, 31), wherein
- the regions (30, 31) extend respectively along a plane (39, 40) that lies substantially perpendicular to the depth direction,
- the regions (30, 31) have a predetermined extent in the depth direction, and
- the regions (30, 31) are arranged so that seen in the depth direction they lie behind one another and only partly overlap, and
e) the imaging device (21) records separate images of the sample on activation and/or excitation of each of the at least two regions (30, 31) and the control and evaluation device obtains from the separate images a depth information of the luminescing label molecules (1), wherein the control and evaluation device (18) is formed so as to control the microscope (6) to carry out a method according to claims 1 to 6.

8. The microscope according to claim 7, **characterised in that** the illuminating beam path (22) introduces the activation and/or excitation radiation in the form of at least one sheet of light (30, 31) lying transverse to the depth direction, whose thickness defines the extent, wherein preferably the thickness of the sheet of light (30, 31) is diffraction-restricted.

9. The microscope according to claim 8, **characterised in that** the illuminating beam path (22) comprises a device (24) that displaces the sheet of light (30, 31) transverse to the depth direction in at least two positions.

10. The microscope according to claim 8, **characterised in that** the illuminating beam path (22) irradiates two spaced-apart, alternately switched on and switched off or differently modulated sheets of light.

11. The microscope according to one of claims 8 to 10, **characterised in that** the illuminating beam path (22) introduces the activation and/or excitation beam along the depth direction in the form of at least a pair of diffraction-restricted foci (41, 42), focuses a first focus (41) of the pair in a first (39) of the two planes and a second focus (42) of the pair in the second (40) of the two planes, and displaces the foci (41, 42) along the respective planes (39, 40) in order to form two regions, wherein the depth sharpness of the focussing defines the extent of the regions.

12. The microscope according to claim 11, **characterised in that** the illuminating beam path (22) comprises a mini-lens array (35, 36) arranged on a rotating disk (33).

## Revendications

1. Procédé de microscopie à luminescence haute résolution d'un échantillon (7) qui est marqué par des molécules de marquage (1), qui sont activables de façon à n'être excitables qu'après avoir été activées pour émission d'un certain rayonnement luminescent, le procédé comprenant les étapes suivantes :
a) activation et excitation d'une quantité partielle des molécules de marquage (1) présentes dans l'échantillon (7), pour émission d'un rayonnement luminescent, au moins une partie des molécules de marquage luminescentes (1) présentant, dans l'échantillon, avec les molécules de marquage luminescentes (1) qui leur sont le plus voisines, au moins une distance qui est supérieure ou égale à la longueur qui ressort d'une résolution optique prédéfinie,
b) enregistrement d'une image de l'échantillon (7) comportant des molécules de marquage luminescentes (1) le long d'une direction en profondeur, et avec la résolution optique prédéfinie, les étapes a) et b) étant mises en oeuvre d'une manière répétée, et
c) production d'images individuelles à partir des images de l'étape b), les emplacements géométriques des molécules de marquage luminescentes (1) étant dans les images individuelles déterminées avec une résolution augmentée jusqu'au-delà de la résolution optique prédéfinie,
dans lequel, pour la haute résolution le long de la direction en profondeur,
d) l'activation et/ou l'excitation dans les étapes a) ont lieu avec un rayonnement qui est introduit dans au moins deux zones,
- les zones (30, 31) s'étendant chacune le long d'un plan (39, 40) qui pour l'essentiel est perpendiculaire à la direction en profondeur,
- les zones (30, 31) ayant une extension prédéfinie dans la direction en profondeur, et
- les zones (30, 31) étant disposées de façon que, quand on les regarde dans la direction en profondeur, elles se trouvent l'une derrière l'autre, avec un chevauchement seulement partiel, et
e) dans les étapes b), des images distinctes de l'échantillon (7) sont enregistrées lors de l'activation et/ou de l'excitation de chacune des zones (30, 31), pour obtenir à partir des images distinctes une information relative à la profondeur des molécules de marquage luminescentes (1), les molécules de marquage luminescentes (1) qui apparaissent dans les deux images distinctes étant séparées par filtrage.

2. Procédé selon la revendication 1, **caractérisé en ce que** les intensités de luminescence des molécules de marquage (1) séparées par filtrage sont comparées dans les deux images, et qu'une indication de profondeur en est déduite.

3. Procédé selon l'une des revendications 1 ou 2, **caractérisé en ce que**, dans l'étape d), le rayonnement est introduit sous forme d'un feuillet de lumière (30, 31) injecté perpendiculairement à la direction en profondeur, feuillet dont l'épaisseur définit l'extension, l'épaisseur du feuillet de lumière étant de préférence limitée par la diffraction.

4. Procédé selon la revendication 3, **caractérisé en ce que** le feuillet de lumière (30, 31) est déplacé, perpendiculairement à la direction en profondeur, et par rapport à l'échantillon, sur au moins deux positions.

5. Procédé selon la revendication 3, **caractérisé en ce que** deux feuillets de lumière (30, 31) écartés l'un de l'autre sont utilisés, qui en alternance sont allumés et éteints, ou sont soumis à des modulations différentes.

6. Procédé selon l'une des revendications 1 ou 2, **caractérisé en ce que** dans l'étape d) le rayonnement le long de la direction en profondeur est injecté sous forme d'au moins une paire de foyers (41, 42) limités par la diffraction, un premier foyer (41) de la paire étant focalisé dans un premier (39) des deux plans, et un deuxième foyer de la paire (41) étant focalisé dans le deuxième (42) des deux plans, les foyers (41, 42) subissent un déplacement le long des plans correspondants (39, 40), pour former les deux zones, et la profondeur de foyer de la focalisation définissant l'extension des zones.

7. Microscope pour microscopie à luminescence haute résolution d'un échantillon (7) qui est marqué par des molécules de marquage (1) qui sont activables de façon à ne pouvoir être excitées qu'après activation pour émission d'un certain rayonnement luminescent, le microscope comprenant :
a) un trajet des rayons d'éclairage (22), configuré pour l'activation et l'excitation répétées d'une quantité partielle des molécules de marquage (1) présentes dans l'échantillon (7) pour émission d'un rayonnement luminescent de telle sorte que, dans l'échantillon (7), au moins une partie des molécules de marquage luminescentes (1) présentent, avec les molécules de marquage luminescentes (1) qui leur sont le plus voisines, au moins une distance qui est supérieure ou égale à une longueur qui ressort d'une résolution optique prédéfinie,
b) un dispositif d'imagerie (21), configuré pour l'enregistrement répété d'une image de l'échantillon (7) comportant des molécules de marquage luminescentes (1) le long d'une direction en profondeur, et avec la résolution optique prédéfinie, et
c) un dispositif de commande et d'évaluation (18), qui produit des images individuelles à partir des images, et qui dans les images individuelles détermine les emplacements géométriques des molécules de marquage luminescentes (1) à l'aide d'une résolution locale augmentée pour aller au-delà de la résolution optique prédéfinie,
dans lequel, pour la haute résolution le long de la direction en profondeur
d) le trajet des rayons d'éclairage (22) introduit le rayonnement d'activation et/ou d'excitation dans au moins deux zones (30, 31),
- les zones (30, 31) s'étendant chacune le long d'un plan (39, 40) qui pour l'essentiel est perpendiculaire à la direction en profondeur,
- les zones (30, 31) ayant dans la direction en profondeur une extension prédéfinie, et
- les zones (30, 31) étant disposées de façon que, quand on les regarde dans la direction en profondeur, elles se trouvent l'une derrière l'autre, avec un chevauchement seulement partiel, et
e) le dispositif d'imagerie (21) enregistre des images distinctes de l'échantillon lors de l'activation et/ou de l'excitation de chacune des au moins deux zones (30, 31), et le dispositif de commande et d'évaluation obtient, à partir des images distinctes, une information portant sur la profondeur des molécules de marquage luminescentes (1), le dispositif de commande et d'évaluation (18) étant configuré de façon à commander le microscope (6) pour la mise en oeuvre d'un procédé selon les revendications 1 à 6.

8. Microscope selon la revendication 7, **caractérisé en ce que** le trajet des rayons d'éclairage (22) injecte le rayonnement d'activation et/ou d'excitation sous forme d'au moins un feuillet de lumière (30, 31) disposé perpendiculairement à la direction en profondeur, dont l'épaisseur définit l'extension, l'épaisseur du feuillet de lumière (30, 31) étant de préférence limitée par la diffraction.

9. Microscope selon la revendication 8, **caractérisé en ce que** le trajet des rayons d'éclairage (22) comprend un dispositif (24) qui déplace le feuillet de lumière (30, 31) perpendiculairement à la direction en profondeur sur au moins deux positions.

10. Microscope selon la revendication 8, **caractérisé en ce que** le trajet des rayons d'éclairage (22) injecte deux feuillets de lumière à distance l'un de l'autre, en alternance allumés et éteints, ou subissant des modulations différentes.

11. Microscope selon l'une des revendications 8 à 10, **caractérisé en ce que** le trajet des rayons d'éclairage (22) injecte le rayonnement d'activation et/ou d'excitation le long de la direction en profondeur sous forme d'au moins une paire de foyers (41, 42) limités par la diffraction, un premier foyer (41) de la paire focalisant dans un premier (39) des deux plans et un deuxième foyer (42) de la paire focalisant dans le deuxième (40) des deux plans, et les foyers (41, 42) se déplaçant le long des plans correspondants (39, 40), pour former deux zones, la profondeur de foyer de la focalisation définissant l'extension des zones.

12. Microscope selon la revendication 11, **caractérisé en ce que** le trajet des rayons d'éclairage (22) comprend une matrice de minilentilles (35, 36), disposée sur un disque tournant (33).
